# EUROPÄISCHE PATENTSCHRIFT

(11) **EP 2 592 333 B1**
(45) Veröffentlichungstag und Bekanntmachung des Hinweises auf die Patenterteilung: **05.08.2020**
(21) Anmeldenummer: 12191547.4
(22) Anmeldetag: 07.11.2012
(51) Int. Cl.: F21S 41/14, F21S 43/14, F21V 8/00, F21S 41/24

(54) **Lichtleitelement für einen Kraftfahrzeugscheinwerfer**
Light guide for a vehicle headlamp
Guide de lumière pour un feu de véhicule automobile

(30) Priorität: 08.11.2011 AT 16532011
(43) Veröffentlichungstag der Anmeldung: 15.05.2013
(73) Patentinhaber: ZKW Group GmbH, 3250 Wieselburg (AT)
(72) Erfinder: Faffelberger, Anton, 3375 Krummnußbaum (AT)
(74) Vertreter: Patentanwaltskanzlei Matschnig & Forsthuber OG

(56) Entgegenhaltungen:
- EP-A1- 1 895 228
- EP-A2- 0 911 574
- AT-U1- 9 091
- US-A- 5 927 850

## Beschreibung

Die Erfindung betrifft ein Lichtleitelement für eine Lichteinheit bzw. einen Kraftfahrzeugscheinwerfer, wobei das Lichtelement zumindest einen Lichteinkoppelbereich zum Einkoppeln von Licht mit zumindest einer Lichtquelle aufweist und das Lichtleitelement weiters zumindest einen Lichtauskoppelbereich zum Auskoppeln des Lichts aufweist. Die Erfindung betrifft außerdem eine Lichteinheit bzw. einen Kraftfahrzeugscheinwerfer mit zumindest einer Lichtquelle mit einem derartigen Lichtleitelement.

Es sind verschiedene Arten von Lichtleitelementen zum Bündeln von Licht bekannt. Das Licht von einer oder mehreren Lichtquellen, z.B. Leuchtdioden (LED), Halogen-, Xenon- oder Entladungslampen wird im Lichteinkoppelbereich in das Lichtleitelement eingekoppelt und gelangt dann auf verschiedene Arten zum Lichtauskoppelbereich. Das dort austretende Licht erzeugt dann eine Lichtfunktion, z.B. Positionslicht, Tagfahrlicht (DRL - daytime running light) oder Blinklicht.

Die AT 009 091 U1 zeigt ein Lichtleitelement gemäß dem Oberbegriff des Anspruchs 1, mit einem Lichteinkoppelbereich und einem Lichtauskoppelbereich, wobei zwischen den Bereichen Lichtleitstäbe vorgesehen sind, die sich fächerförmig ausbreiten und verschiedene Querschnitte aufweisen. Die Lichtleitstäbe sind dabei als Aussparungen im Lichtleitelement ausgeführt.

Die EP 1895228 A1 zeigt eine Vorrichtung mit drei Zonen, wobei die erste Zone zur Einkopplung von Licht dient, die zweite Zone das Licht gleichmäßig verteilt und in der dritten Zone das Licht wieder austritt. Entsprechende optische Elemente in der zweiten Zone sorgen dabei für eine gleichmäßige Leuchtdichte.

Die WO 2011/021135 A1 zeigt eine Linsenanordnung für eine Leuchtquelle, die topfförmig aufgeht und aus streifenförmigen lichtleitenden Elementen besteht. Das Licht einer Lichtquelle - z.B. einer LED - wird über die Lichtleiterelemente in Richtung einer plattenförmigen Lichtaustrittsfläche verteilt.

DE 698 33 421 T2 beschreibt eine Lichtabgabeoptik für Fahrzeugsignalleuchten, die eine Platte aus lichtdurchlässigem Material umfasst, in der Öffnungen mit konkaven und konvexen Flächen ausgeführt sind, die als Zylinderlinsen fungieren und eine gleichmäßige Lichtverteilung über die lichtdurchlässige Platte ermöglichen.

Nachteilig an diesen bekannten Lösungen ist insbesondere, dass das über den Lichtauskoppelbereich austretende Licht meist aus konstruktiven Gründen inhomogen verteilt ist, was insbesondere bei Verwendung von Lichtquellen mit besonders stark ausgeprägter Hauptabstrahlrichtung, wie z.B. LEDs, der Fall und unerwünscht ist. Dadurch wirkt das über den Lichtauskoppelbereich austretende Licht ungleichmäßig hell bzw. bildet sich die Lichtquelle verstärkt ab.

Häufig lassen sich die bekannten Lichtleitelemente nur schwer mir günstigen Spritzgussverfahren herstellen, da die klein dimensionierten Aussparungen und Freistellungen im Formtrennbereich Grate verursachen können, die zu erheblichen Lichtverlusten führen. Dementsprechend sind dann die Werkzeuge in Herstellung und Betrieb (Wartungskosten) vergleichsweise teuer.

Es ist daher eine Aufgabe der Erfindung, ein Lichtleitelement bereit zu stellen, das unabhängig von der verwendeten Lichtquelle eine gleichmäßige Lichtverteilung erzeugt.

Diese Aufgabe wird erfindungsgemäß durch ein Lichtleitelement mit den Merkmalen des Anspruchs 1 gelöst.

Das erfindungsgemäße Lichtleitelement erlaubt eine gleichmäßige Leuchtdichte unabhängig von der verwendeten Lichtquelle, da die Einspeisung in das Verbindungselement nicht direkt, sondern über die Lichtleiterteile erfolgt. Außerdem kann die im Lichtkoppelbereich austretende Lichtmenge durch entsprechende Gestaltung des Verbindungselements optimal angepasst werden, wobei die Abstrahlcharakteristik der jeweiligen Lichtquelle berücksichtigt werden kann. Die optischen Strukturierungselemente leiten das eingestrahlte Licht in die Lichtleitstäbe oder -rillen im Verbindungselement um und unterstützen damit eine homogene Lichtverteilung. Der Lichtauskoppelbereich ist günstigerweise formschön mit glatter Oberfläche konstruiert, was dadurch ermöglicht wird, dass dank der erfindungsgemäßen Lösung eine Homogenisierung des Lichts bereits im Lichtleitelement erfolgt. Natürlich kann aber die Oberfläche des Lichtauskoppelbereichs beliebig, beispielsweise strukturiert, ausgeführt werden.

Das erfindungsgemäße Lichtleitelement erlaubt die Erfüllung der für Kraftfahrzeugteile geltenden gesetzlichen Regelungen wie beispielsweise ECE, SAE und CCC und weist eine besonders homogene Lichtverteilung auf. Unter homogen wird hier eine Lichtverteilung verstanden, die keine Intensitätssprünge aufweist. Allerdings ist es nicht notwendig, dass das emittierte Licht überall dieselbe Intensität hat; beispielsweise kann die Lichtverteilung mittig ein Maximum und zu den äußeren Bereichen hin verlaufend eine abnehmende Intensität aufweisen.

In einer Variante der Erfindung ist im Strahlteilbereich an der Stelle, von der die Lichtleiterteile ausgehen, zumindest ein Gabelungselement vorgesehen. Das Gabelungselement ist dabei günstigerweise optisch dünner als der Rest des Lichtleitelements. Das Gabelungselement kann beispielsweise als stark verdünnte Stelle des Lichtleitelements oder aus Luft, also als Öffnung bzw. durchbrochene Stelle ausgeführt sein. Das Gabelungselement dient dazu, die möglichst vollständige Umleitung des eingekoppelten Lichts in die Lichtleiterteile sicherzustellen. Außerdem trägt das Gabelungselement dazu bei zu verhindern, dass sich die Lichtquelle als direkter Spot in der austretenden Lichtverteilung abbildet.

In einer Variante der Erfindung sind die Querschnitte der Unterstränge mit verschiedenen Durchmessern ausgeführt. Beispielsweise können die Durchmesser in eine Richtung zu- oder abnehmen. Dadurch kann die Intensitätsverteilung des ausgekoppelten Lichts zusätzlich gestaltet werden. Die Unterstränge können beispielsweise als Lichtleitstäbe und/oder als Lichtleitrillen ausgeführt sein. Über die Unterstränge kann das eingekoppelte Licht in den Lichtauskoppelbereich geführt werden. Die Ausrichtung der Lichtleitstäbe bzw. Lichtleitrillen ergibt die Hauptabstrahlrichtung des gesamten Lichtleitelements. Die Lichtleitstäbe können separat gefertigt, durch Freistellungen strukturiert oder beim Spritzgießen ausgeführt werden. Die Rillen können nach der Fertigung eingeprägt oder freigestellt werden bzw. direkt beim Spritzgießen ausgeführt werden. Dementsprechend können die Unterstränge auch untereinander verbunden sein, was bei Ausführung als Lichtleitrillen unmittelbar evident ist. Aber auch bei der Ausführung als Lichtleitstäbe können dünne Verbindungen zwischen nebeneinander angeordneten Lichtleitstäben bestehen.

In einer Variante der Erfindung entspringen die Lichtleitstäbe und/oder Lichtleitrillen an den Lichtleiterteilen außerhalb des Strahlteilbereichs und sind so ausgeführt, dass sie in Richtung des Lichtauskoppelbereichs im Schattenbereich des Strahlteilbereichs verlaufen. Der Schattenbereich findet sich in Einstrahlrichtung gesehen hinter dem Gabelungselement (falls vorhanden). Die Lichtleitstäbe bzw. Lichtleitrillen erstrecken sich also auch in den vom Strahlteilbereich beschatteten Bereich des Verbindungselements und sorgen für eine homogene Lichtverteilung am Lichtauskoppelbereich des Lichtleitelements. Dadurch wird verhindert, dass sich die Lichtquelle als heller Intensitätsfleck abbildet, was insbesondere bei der Verwendung von Leuchtdioden häufig ein Problem darstellt.

Vorteilhafterweise weisen die Strukturierungselemente eine Prismenstruktur auf. Die Prismenstruktur ist in bekannter Weise ausgeführt und lenkt die vom Strahlteilungsbereich kommenden Strahlen in das Verbindungselement bzw. in die dort ausgeführten Unterstränge (Lichtleitstäbe bzw. -rillen). Von dort gelangt das Licht dann in den Lichtauskoppelbereich und wird abgestrahlt. Durch geschickte Gestaltung dieser Prismenstruktur kann das Licht schon vorhomogenisiert werden. Anpassbare Parameter der Prismenstruktur sind beispielsweise Dichte und/oder Anzahl und/oder Tiefe und/oder Breite der Prismen.

Eine weitere Beeinflussung der Lichtverteilung lässt sich erreichen, wenn die Lichtleiterteile unterschiedliche Querschnittsdurchmesser aufweisen. Je nachdem kann dann die Lichtverteilung gesteuert werden, indem beispielsweise der erste Lichtleiterteil mit einem größeren Querschnittsdurchmesser versehen wird als der zweite, bzw. umgekehrt.

Zur besseren Positionierung des Lichtleitelements ist zwischen dem Lichteinkoppelbereich und dem Strahlteilbereich zumindest ein Zuleitungselement vorgesehen. Günstigerweise ist das Zuleitungselement als Lichtleiter ausgeführt. Dadurch ist es möglich, Lichtquelle und Lichtleitelement völlig unabhängig voneinander zu positionieren, da das Licht der Lichtquelle über das Zuleitungselement in den Strahlteilbereich. Damit ist das Lichtleitelement vielfältigst einsetzbar.

In einer Variante der Erfindung sind der Lichteinkoppelbereich, der Strahlteilbereich und die Lichtleiterteile einstückig ausgeführt. Weiters kann das Verbindungselement und der Lichtauskoppelbereich einstückig ausgeführt sein. In einer weiteren Variante der Erfindung sind der Lichteinkoppelbereich, der Strahlteilbereich, die Lichtleiterteile, das Verbindungselement und der Lichtauskoppelbereich einstückig ausgeführt.

Um die Montage des erfindungsgemäßen Lichtleitelements zu erleichtern, sind am Lichtleitelement im Bereich des Lichteinkoppelbereichs Verrastungs- und/oder Referenzierelemente zur Montage des Lichtleitelements vorgesehen. Wenn beispielsweise das Lichtleitelement mit einem Lichtquellen-Modul zu verbinden ist, über das das Licht eingekoppelt wird, kann durch diese Verrastungs- und/oder Referenzierelemente eine feste und gleichzeitig lösbare Fixierung sichergestellt werden, die gleichzeitig eine optimale Positionierung des Lichtleitelements hinsichtlich der Lichtquellen erlaubt. Entsprechend sind dann an dem Lichtquellen-Modul (bzw. dem Objekt, mit dem das Lichtleitelement verbunden werden soll), in bekannter Art entsprechend korrespondierende Fixierungselemente vorzusehen. Die Verrastungs- und/oder Referenzierelemente dienen weiters als Zentrier- und eben Referenzierelemente, sorgen also dafür, dass das Lichtleitelement reproduzierbar so montiert werden kann, dass die gewünschte Lichtfunktion sichergestellt ist, bzw. dass die geforderte Lichtverteilung abgestrahlt wird.

Des Weiteren kann die ausgekoppelte Lichtmenge erhöht bzw. können die lichtabstrahlende Fläche und/oder die beleuchtete Fläche vergrößert werden, indem gemäß einer Variante der Erfindung im Lichtauskoppelbereich zumindest ein Zusatzlichtauskoppelbereich vorgesehen ist. Günstigerweise ist dazu im Lichtauskoppelbereich zumindest ein in Strahlrichtung offenes Schalenelement vorgesehen, an dessen vom Lichteinkoppelbereich abgewandter Seite der Zusatzlichtauskoppelbereich angeordnet ist. Vorteilhafterweise sind ein erstes Schalenelement mit einem ersten Zusatzlichtauskoppelbereich und ein zweites Schalenelement mit einem zweiten Zusatzlichtauskoppelbereich vorgesehen.

Die eingangs erwähnte Aufgabe wird außerdem erfindungsgemäß durch eine eingangs erwähnte Lichteinheit bzw. einen Kraftfahrzeugscheinwerfer gelöst, wobei zumindest ein Lichtleitelement zum Einkoppeln von Licht aus zumindest einer Lichtquelle vorgesehen ist. Der Kraftfahrzeugscheinwerfer dient beispielsweise zur Erzeugung einer Lichtfunktion wie Positionslicht, Tagfahrlicht (DRL - Daytime Running Light) oder Blinklicht.

Will man z.B. Positionslicht und/oder DRL erzeugen, so benötigt man weißes Licht; bei Blinklicht gelbes Licht. Kombiniert man nun diese Lichtfunktionen in einem einzigen Lichtleitersystem, so benötigt man entweder eine Lichtquelle die beide Farben zur Verfügung stellt oder zwei unterschiedliche LEDs, die dann wahlweise geschaltet werden können. Dementsprechend ist gemäß einer Variante der Erfindung das Lichtquellen-Modul dazu eingerichtet, mehrfarbiges Licht in das Lichtleitelement einzukoppeln. Dies kann entweder durch das Vorsehen mehrerer Lichtquellen oder aber durch eine einzige Lichtquelle realisiert werden, die Licht in mehreren Farben ausstrahlen kann. Damit kann je nach gewünschter Lichtfunktion z.B. wahlweise entweder weißes und/oder gelbes Licht eingekoppelt werden.

Günstigerweise ist das Lichtquellen-Modul (bzw. dessen Lichtquellen) dimmbar ausgeführt. Das bedeutet, dass die darin angeordneten Lichtquellen dimmbar sind und in ihrer Intensität verändert werden können. Damit lassen sich unterschiedliche Lichtintensitäten realisieren, wie sie z.B. in den verschiedenen gesetzlichen Bestimmungen gefordert werden.

In einer Variante der Erfindung ist im Lichtquellen-Modul als Lichtquelle zumindest ein LED-Chip vorgesehen. Derartige Lichtquellen sind bekannt; natürlich können auch beliebige andere, dem Fachmann bekannte Lichtquellen zur Anwendung kommen.

Im Folgenden wird die Erfindung anhand eines nicht einschränkenden Ausführungsbeispiels, das in der Zeichnung dargestellt ist, näher erläutert. In dieser zeigt schematisch:
Fig. 1 eine perspektivische Ansicht eines erfindungsgemäßen Lichtleitelements von schräg vorne mit Zierblende,
Fig. 2 eine perspektivische Ansicht eines erfindungsgemäßen Lichtleitelements von schräg vorne ohne Zierblende,
Fig. 3 eine perspektivische Ansicht von der Seite,
Fig. 4 eine perspektivische Ansicht von schräg hinten,
Fig. 5 eine Schnittansicht des Verbindungselements des Lichtleitelements entlang der Linie A-A in Fig. 3, und
Fig. 6 eine Seitenansicht einer Variante des erfindungsgemäßen Lichtleitelements.

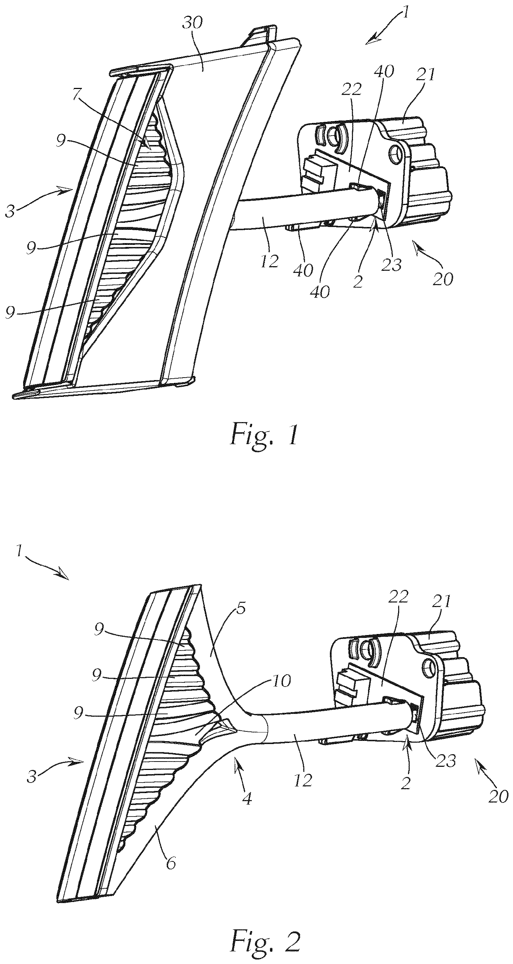

Fig. 1 zeigt ein erfindungsgemäßes Lichtleitelement 1 in einer Ansicht von schräg vorne. Das Lichtleitelement 1 ist beispielsweise aus lichtleitendem Kunststoff, Glas oder anderen lichtleitenden Materialien gefertigt, beispielsweise im Spritzgußverfahren. Über einen Lichteinkoppelbereich 2 wird Licht von zumindest einer Lichtquelle, beispielsweise einer Leuchtdiode (LED), eingespeist und tritt über einen Lichtauskoppelbereich 3 wieder aus. Die Leuchtquellen, im vorliegenden Beispiel LED-Chips 23, sind in einem Lichtquellen-Modul 20 auf einer Platine 22 mit entsprechender Kontaktierung angeordnet. Beispielsweise können in der Platine 22 entsprechende Steckverbindungen zur Fixierung der LED-Chips 23 vorgesehen sein. Das Lichtquellen-Modul 20 umfasst weiters einen Kühlkörper 21 zum Abführen der durch den Betrieb der LED-Chips 23 entstehenden Wärme.

Grundsätzlich ist zumindest eine Lichtquelle notwendig, es kann aber günstig sein, mehrere verschiedenfarbige Lichtquellen (oder eine Lichtquelle, die mehrere Farben zur Verfügung stellen kann) vorzusehen, um ein breiteres Spektrum an Lichtfunktionen abdecken zu können. Beispielsweise benötigt man für Positionslicht und/oder DRL (Tagfahrlicht) weißes Licht, bei Blinklicht ist gelbes Licht notwendig. Diese beiden Funktionen können also entweder mit einem LED-Chip 23 oder mehreren LED-Chips in einem einzigen Lichtleitersystem kombiniert werden, die dann jeweils entsprechend geschaltet werden.

Günstigerweise sind die Lichtquellen dabei dimmbar, so dass die unterschiedlichen Lichtintensitäten entsprechend den oben erwähnten gesetzlichen Vorschriften erreicht werden.

Das erfindungsgemäße Lichtleitelement kann zusammen mit einem derartigen Lichtquellen-Modul 20 in einer Lichteinheit bzw. einem Kraftfahrzeugscheinwerfer zum Einsatz kommen.

In Fig. 1 ist ein Großteil des Lichtleitelements 1 von einer Zierblende 30 umgeben. Sie dient dazu, das Austreten von Störstrahlung, verursacht durch Mikrooberflächenfehler oder Ähnlichem am Lichtleitelement, zu minimieren und so eine homogene Lichtverteilung sicherzustellen. Dadurch wird außerdem verhindert, dass Licht an unerwünschten Stellen austritt bzw. im Scheinwerfersystem gespiegelt wird. Die nachfolgend beschriebenen Elemente des Lichtleitelements 1 sind in den Fig. 2 bis Fig. 4 erkennbar.

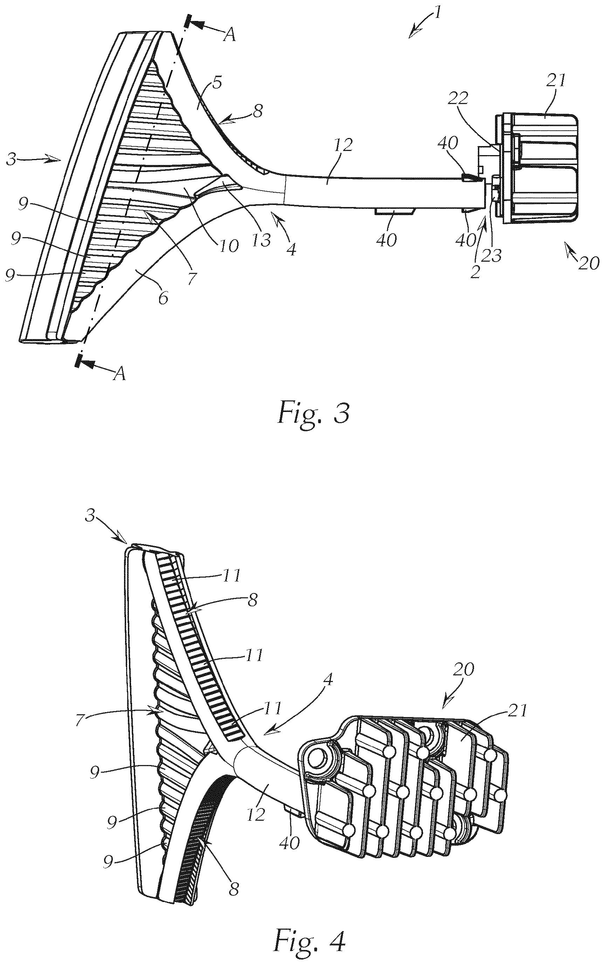

Zwischen dem Lichteinkoppel- 2 und dem Lichtauskoppelbereich 3 ist ein Strahlteilbereich 4 angeordnet, an dem der vom Lichteinkoppelbereich 2 kommende Teil des Lichtteilelements 1 in einen ersten 5 und einen zweiten Lichtleiterteil 6 aufgeteilt wird, die in voneinander wegführende Richtungen verlaufen. Gemäß einer Variante kann im Strahlteilbereich 4 ein Gabelungselement 13 (siehe Fig. 3) an der Stelle vorgesehen sein, von der die Lichtleiterteile 5, 6 ausgehen. Das Gabelungselement 13 ist dabei optisch dünner ausgeführt als der Rest des Lichtleitelements 1, also beispielsweise aus Luft, also als Öffnung bzw. durchbrochene Stelle. Eine weitere Variante wäre das Ausführen als stark verdünnte Stelle des Lichtleitelements 1, wo durch die Kombination aus dünner Elementschicht und Luft als verbleibender Teil des Gabelungselements 13 ein optisch dünnerer Bereich angenähert wird. Möglich wäre auch das Ausführen aus einem vom Rest des Lichtleitelements 1 verschiedenen, optisch dünneren Material.

Um den Lichtauskoppelbereich 3 in Bezug auf die Lichteinkoppelfläche 2 bzw. die Lichtquelle beliebig anordnen zu können, ist im vorliegenden Ausführungsbeispiel zwischen Lichteinkoppelbereich 2 und Strahlteilbereich 4 ein Zuleitungselement 12 in Form eines Lichtleiters vorgesehen. Wie in der Seitenansicht gemäß Fig. 2 erkennbar ist, ist das Zuleitungselement 12 im dargestellten Ausführungsbeispiel kurz und geradlinig, kann aber auch länger und gewunden ausgeführt bzw. angeordnet sein.

Am Lichtleitelement 1, bevorzugt am Zuleitungselement 12 (bzw. allgemein gesprochen nahe dem Lichteinkoppelbereich 2), sind Verrastungs- und/oder Referenzierelemente vorgesehen, mit denen das Lichtleitelement 1 an seinem bestimmungsgemäßen Ort verbaut werden kann. Die Verrastungs- und/oder Referenzierelemente sind beispielsweise als Rastnasen ausgeführt, die mit entsprechenden korrespondierenden Elementen am Verwendungsort (z.B. dem Lichtquellen-Modul 20) des Lichtleitelements 1 zusammenwirken. Diese Verbindung kann dabei entsprechend der gängigen Ausführung von Rastverbindungen lösbar sein. Die Verrastungs- und/oder Referenzierelemente 40 dienen gleichzeitig zur Referenzierung, also zur reproduzierbaren Montage des Lichtleitelements 1.

In der Ausführung sind die Verrastungs- und Referenzierelemente 40 im Prinzip gleich ausgeführt, können aber einerseits durch Wechselwirken mit einem entsprechenden Gegenstück an der Lichteinheit zur Fixierung dienen, andererseits ohne entsprechende Gegenwirkung zur Referenzierung, also zur (reproduzierbaren) Sicherstellung der gewünschten Lichtverteilung.

Wie anhand von Fig. 2 erkennbar ist, verlaufen die Lichtleiterteile 5, 6 in voneinander wegführende Richtungen - im Wesentlichen können sie einen Winkel von bis zu 180° aufspannen. Die Lichtleiterteile 5, 6 verlaufen nicht in geraden Linien, sondern in Kurven - der Winkel zwischen den Lichtleiterteilen 5, 6 ist also entweder als der Winkel zu verstehen, den jeweils geradlinige Verbindungen zwischen Strahlteilbereich 4 und Endpunkt des jeweiligen Lichtleiterteils 5, 6 einschließen, oder als Winkel zwischen den Tangentialen an die Lichtleiterteile 5, 6 an bestimmten Punkten.

Der Verlauf der Lichtleiterteile 5, 6 kann entsprechend dem vorhandenen Bauraum und der Größe der Spannweite gewählt werden. Dabei ist zu beachten, dass die Krümmung der Lichtleiterteile 5, 6 noch eine Totalreflexion des eingekoppelten Lichts erlaubt, bzw. dass es nicht zu übermäßigen Lichtverlusten kommt. Grundsätzlich kann der Fachmann aus den oben angeführten Informationen eine Anleitung zur Ausführung der Lichtleiterteile 5, 6 entnehmen.

Im von den Lichtleiterteilen 5, 6 aufgespannten Bereich ist ein lichtleitendes Verbindungselement 7 angeordnet, das an seiner von den Lichtleiterteilen 5, 6 abgewandten Seite in den Lichtauskoppelbereich 3 übergeht.

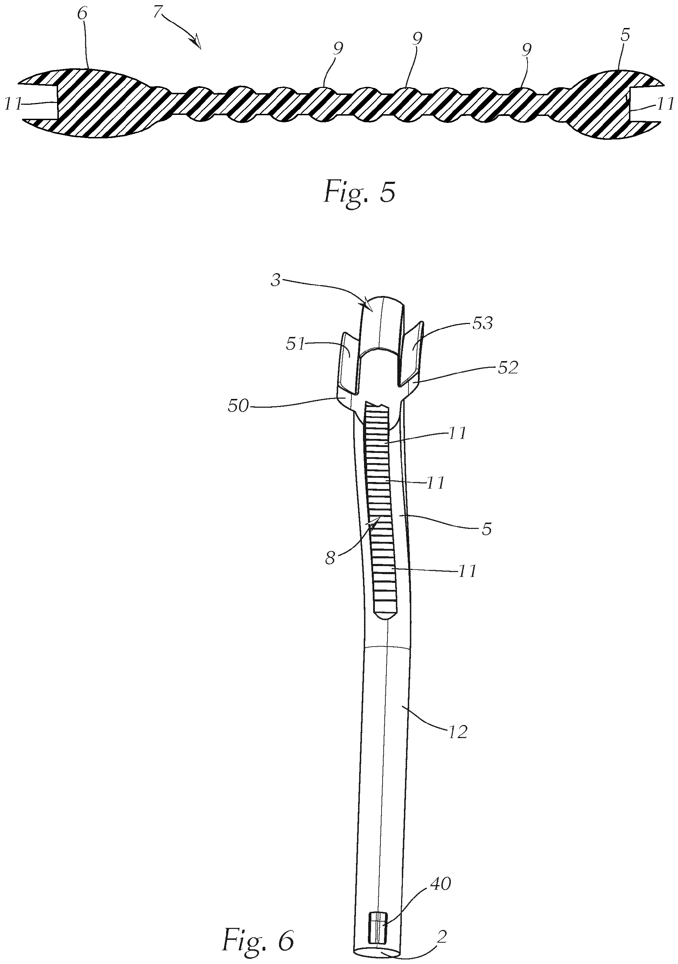

Das lichtleitende Verbindungselement 7 weist beispielsweise eine fächerförmige Einspeisung mit Untersträngen auf, die in den Lichtleiterteilen 5, 6 entspringen und in den Lichtauskoppelbereich 3 münden. Die Unterstränge sind im dargestellten Ausführungsbeispiel als Lichtleitstäben 9 ausgeführt. Fig. 5 zeigt einen Schnitt durch das Lichtleitelement 1 in Fig. 3 entlang der Linie A-A - zwischen den Lichtleiterteilen 5, 6 ist das Verbindungselement 7 mit den Lichtleitstäben 9 zu erkennen.

Die Querschnitte der Lichtleiterteile 5, 6 und auch der einzelnen Lichtleitstäbe 9 untereinander weisen im dargestellten Ausführungsbeispiel im Wesentlichen gleiche Durchmesser auf. Zur Beeinflussung der Lichtverteilung können hier aber auch verschiedene Durchmesser gewählt werden. Beispielsweise können sich die Durchmesser der Lichtleitstäbe 9 über das Verbindungselement 7 unterscheiden, beispielsweise zu- oder abnehmen. Zur Erzeugung eines Maximums in der Lichtverteilung können die eher zentral gelegenen Lichtleitstäbe 9 dicker bzw. breiter ausgeführt sein. Weiters können einzelne Lichtleitstäbe 9 über ihre Länge mit zunehmenden und/oder abnehmenden Durchmessern ausgeführt sein oder über ihren Verlauf sonstige Änderungen im Querschnitt aufweisen. Beispielsweise kann ein Lichtleitstab 9 am Ort seines Ursprungs am Lichtleiterteil 5, 6 einen schmalen Durchmesser haben, der sich dann in Richtung des Lichtauskoppelbereichs 3 vergrößert.

Auch durch Variieren der Querschnittsdurchmesser der Lichtleiterteile 5, 6 kann eine Veränderung der Lichtverteilung bewirkt werden, z.B. indem der Durchmesser des ersten Lichtleiterteils 5 größer gewählt wird als der Durchmesser des zweiten Lichtleiterteils 6.

Natürlich kann das Verbindungselement 7 durch andere Ausführung der Unterstränge auch anders lichtleitend ausgeführt sein, beispielsweise durch das Vorsehen von Lichtleitrillen, Kombinationen von Rillen und Stäben und ähnlichen, dem Fachmann bekannten Lösungen. Die Unterstränge können dabei auch Verbindungen untereinander aufweisen, was beispielsweise bei Ausführung als Lichtleitrillen evident ist. Aber auch bei der Ausführung als Lichtleitstäbe können Verbindungen zwischen benachbart angeordneten Stäben bestehen, was beispielsweise fertigungsbedingt sein kann. Die Querschnitte der Unterstränge können kreisförmig, prinzipiell auch polygonförmig bzw. eckig oder auf andere geeignete Art ausgeführt sein. Bei eckiger Ausführung kann es zu Lichtverlusten an den Ecken und Kanten kommen, weswegen die runde bzw. ovale Form vorzuziehen ist.

Die Orientierung der Unterstränge bzw. der Lichtleitstäbe 9 definiert die Hauptabstrahlrichtung des gesamten Lichtleitelements 1 und können daher je nach Einsatzgebiet passend ausgeführt werden. Die Lichtleitstäbe 9 sind so ausgeführt, dass sie in Richtung des Lichtauskoppelbereichs 3 auch im Schattenbereich 10 des Strahlteilbereichs 4 verlaufen: Im Strahlteilbereich 4 wird der vom Lichteinkoppelbereich 2 kommende Teil des Lichtleitelements 1 komplett in die Lichtleiterteile 5, 6 aufgeteilt - in Hauptstrahlrichtung entsteht dadurch hinter dem Strahlteilbereich 4 ein beschatteter Teil.

Das hat einerseits den Vorteil, dass so eine erhöhte Lichtintensität in dem Bereich verhindert wird, an dem die Lichtquelle in das Lichtleitelement 1 eingekoppelt wird - bei Verwendung einer Leuchtdiode kann eine massiv erhöhte kreisförmige Lichtintensität auftreten, die die homogene Leuchtdichte des Lichtleitelements 1 stört. Andererseits entsteht aber durch den beschatteten Teil wieder eine Störung in der Leuchtdichte, die durch die oben beschriebene Ausführung der Unterstränge (Lichtleitstäbe 9) behoben wird.

Daher werden die Lichtleitstäbe 9 so ausgeführt, dass sie außerhalb des Strahlteilbereichs 4 entspringen und in Richtung des Lichtauskoppelbereichs 3 gebogen in den Schattenbereich des Strahlteilbereichs 4 verlaufen. Die Lichtleitstäbe 9 münden daher gleichmäßig in den Lichtauskoppelbereich 3, wodurch eine homogene Leuchtdichte des Lichtleitelements 1 erreicht wird.

Das am Lichteinkoppelbereich 2 eingespeiste Licht gelangt über das Zuleitungselement 12 (falls vorhanden) zum Strahlteilbereich 4, wo das Licht in die Lichtleiterteile 5, 6 geleitet wird. Durch optische Strukturierungselemente 8 (siehe Fig. 3) in den Lichtleiterteilen 5, 6 wird das Licht dann in das Verbindungselement 7 bzw. die Lichtleitstäbe 9 eingeleitet und tritt von dort über den Lichtauskoppelbereich 3 wieder aus.

Die optischen Strukturierungselemente 8 sind auf der vom Lichtauskoppelbereich 3 abgewandten Seite der Lichtleiterteile 5, 6 angeordnet. Die Strukturierungselemente 8 sind als Prismenstruktur 11 - also als eine Reihe von Prismen - ausgeführt; auch andere Ausführungen, mit denen das Licht entsprechend in das Verbindungselement 7 geleitet werden kann, sind möglich. Durch geschickte Gestaltung dieser Prismenstruktur 11 kann das Licht schon vorhomogenisiert werden. Anpassbare Parameter der Prismenstruktur 11 sind beispielsweise Anzahl und/oder Tiefe und/oder Breite der Prismen.

Der Lichtauskoppelbereich 3 ist gemäß der dargestellten Ausführungsform mit einer glatten Oberfläche konstruiert, was aus Designgründen häufig von Vorteil ist. Der Lichtauskoppelbereich 3 kann aber auch anders ausgeführt sein, beispielsweise um eine höhere Lichtausbeute zu erreichen, die beleuchtete Fläche oder die lichtabstrahlende Fläche zu vergrößern - Fig. 6 zeigt eine solche Variante, bei der ein erfindungsgemäßes Lichtleitelement 1 von der Seite zu sehen ist (diese Ansicht entspricht im verbauten Zustand der Ansicht von oben). Im Lichtauskoppelbereich 3 sind zwei Zusatzlichtauskoppelbereiche 51, 53 vorgesehen, die als in Strahlrichtung offene Schalenelemente 50, 52 ausgeführt sind, an deren vom Lichteinkoppelbereich 2 abgewandten Seite die Zusatzlichtauskoppelbereiche angeordnet sind. Das erste Schalenelement 50 mit dem ersten Zusatzlichtauskoppelbereich 51 und das zweite Schalenelement 52 mit dem zweiten Zusatzlichtauskoppelbereich 53 sind dabei an gegenüberliegenden Seiten des Lichtleitelements 1 angeordnet.

Durch das Vorsehen der Zusatzlichtauskoppelbereiche 51, 53 wird die beleuchtete Fläche erhöht, was aus Gründen der besseren Sichtbarkeit (z.B. bei Tagfahrlicht) von Vorteil ist. Die beleuchtete Fläche ist bei gewissen Lichtverteilungen gesetzlich bestimmt und darf einen Grenzbetrag nicht unterschreiten.

Die Zusatzlichtauskoppelbereiche 51, 53 können mit glatter Oberfläche ausgeführt sein aber auch eine zusätzliche Strukturierung aufweisen, um die lichtabstrahlende Oberfläche zu vergrößern bzw. die über diese Bereiche abgestrahlte Lichtmenge zu beeinflussen.

Vorteilhafterweise ist das gesamte Lichtleitelement 1 einstückig ausgeführt, Lichteinkoppelbereich 2, Strahlteilbereich 4, Lichtleiterteile 5, 6, Verbindungselement 7 und Lichtauskoppelbereich 3 bilden also eine Einheit. Alternativ können auch nur Lichteinkoppelbereich 2, Strahlteilbereich 4 und die Lichtleiterteile 5, 6 einstückig ausgeführt werden, bzw. nur Verbindungselement 7 und Lichtleiterteile 5, 6.

### BEZUGSZEICHEN

- 1: Lichtleitelement
- 2: Lichteinkoppelbereich
- 3: Lichtauskoppelbereich
- 4: Strahlteilbereich
- 5: erster Lichtleiterteil
- 6: zweiter Lichtleiterteil
- 7: Verbindungselement
- 8: Strukturierungselement
- 9: Lichtleitstab
- 10: Schattenbereich
- 11: Prismenstruktur
- 12: Zuleitungselement
- 13: Gabelungselement
- 20: Lichtquellen-Modul
- 21: Kühlkörper
- 22: Platine (mit Kontaktierung)
- 23: LED-Chip
- 30: Zierblende
- 40: Verrastungs- oder Referenzierelement
- 50: erstes Schalenelement
- 51: erster Zusatzauskoppelbereich
- 52: zweites Schalenelement
- 53: zweiter Zusatzauskoppelbereich

## Patentansprüche

1. Lichtleitelement (1) für eine Lichteinheit bzw. einen Kraftfahrzeugscheinwerfer, wobei das Lichtleitelement (1) zumindest einen Lichteinkoppelbereich (2) zum Einkoppeln von Licht mit zumindest einer Lichtquelle aufweist und das Lichtleitelement (1) weiters zumindest einen Lichtauskoppelbereich (3) zum Auskoppeln des Lichts aufweist, wobei
zwischen dem Lichteinkoppel- (2) und dem Lichtauskoppelbereich (3) ein Strahlbereich (4) angeordnet ist, an dem der vom Lichteinkoppelbereich (2) kommende Teil des Lichtleitelements (1) in zumindest einen ersten Lichtleiterteil (5) und zumindest einen zweiten Lichtleiterteil (6) aufgeteilt wird, die in voneinander wegführende Richtungen verlaufen, wobei in dem von den Lichtleiterteilen (5, 6) aufgespannten Bereich ein lichtleitendes Verbindungselement (7) angeordnet ist, das an seiner von den Lichtleiterteilen (5, 6) abgewandten Seite in den Lichtauskoppelbereich (3) übergeht, **dadurch gekennzeichnet, dass** in dem Verbindungselement (7) Lichtleitstäbe und/ oder Lichtleitrillen ausgeführt sind, die an den Lichtleiterteilen (5, 6) entspringen und in den Lichtauskoppelbereich (3) münden und dass die Lichtleiterteile (5, 6) an ihrer vom Lichtauskoppelbereich (3) abgewandten Seite optische Strukturierungselemente (8) zur Umleitung des eingestrahlten Lichts in das Verbindungselement aufweisen.

2. Lichtleitelement (1) nach Anspruch 1, **dadurch gekennzeichnet, dass** im Strahlteilbereich (4) an der Stelle, von der die Lichtleiterteile (5, 6) ausgehen zumindest ein Gabelungselement (13) vorgesehen ist.

3. Lichtleitelement (1) nach Anspruch 2, **dadurch gekennzeichnet, dass** das Gabelungselement (13) optisch dünner ist als der Rest des Lichtleitelements.

4. Lichtleitelement (1) nach einem der vorhergehenden Ansprüche, **dadurch gekennzeichnet, dass** die Querschnitte der Unterstränge mit verschiedenen Durchmessern ausgeführt sind.

5. Lichtleitelement (1) nach einem der Ansprüche 1 bis 4, **dadurch gekennzeichnet, dass** die Lichtleitstäbe (9) und/oder Lichtleitrillen an den Lichtleiterteilen (5, 6) abseits/außerhalb des Strahlteilbereichs (4) entspringen und so ausgeführt sind, dass sie sich in den vom Strahlteilbereich (4) beschatteten Bereich des Verbindungselements erstrecken.

6. Lichtleitelement (1) nach einem der vorhergehenden Ansprüche, **dadurch gekennzeichnet, dass** die Strukturierungselemente (8) eine Prismenstruktur (11) aufweisen.

7. Lichtleitelement (1) nach einem der vorhergehenden Ansprüche, **dadurch gekennzeichnet, dass** die Lichtleiterteile (5, 6) unterschiedliche Querschnittsdurchmesser aufweisen.

8. Lichtleitelement (1) nach einem der vorhergehenden Ansprüche, **dadurch gekennzeichnet, dass** zwischen dem Lichteinkoppelbereich (2) und dem Strahlteilbereich (4) zumindest ein Zuleitungselement (12) vorgesehen ist.

9. Lichtleitelement (1) nach Anspruch 8, **dadurch gekennzeichnet, dass** das Zuleitungselement (12) als Lichtleiter ausgeführt ist.

10. Lichtleitelement (1) nach einem der vorhergehenden Ansprüche, **dadurch gekennzeichnet, dass** der Lichteinkoppelbereich (2), der Strahlteilbereich (4) und die Lichtleiterteile (5, 6) einstückig ausgeführt sind.

11. Lichtleitelement (1) nach einem der vorhergehenden Ansprüche, **dadurch gekennzeichnet, dass** das Verbindungselement (7) und der Lichtauskoppelbereich (3) einstückig ausgeführt sind.

12. Lichtleitelement (1) nach einem der Ansprüche 1 bis 9, **dadurch gekennzeichnet, dass** der Lichteinkoppelbereich (2), der Strahlteilbereich (4), die Lichtleiterteile (5, 6), das Verbindungselement (7) und der Lichtauskoppelbereich (3) einstückig ausgeführt sind.

13. Lichtleitelement (1) nach einem der vorhergehenden Ansprüche, **dadurch gekennzeichnet, dass** am Lichtleitelement (1) im Bereich des Lichteinkoppelbereichs (2) Verrastungs- und/oder Referenzierelemente (40) zur Montage des Lichtleitelements (1) vorgesehen sind.

14. Lichtleitelement (1) nach einem der vorhergehenden Ansprüche, **dadurch gekennzeichnet, dass** im Lichtauskoppelbereich (3) zumindest ein Zusatzlichtauskoppelbereich (51, 53) vorgesehen ist.

15. Lichtleitelement (1) nach Anspruch 14, **dadurch gekennzeichnet, dass** im Lichtauskoppelbereich (51, 53) zumindest ein in Strahlrichtung offenes Schalenelement (50, 52) vorgesehen ist, an dessen vom Lichteinkoppelbereich (2) abgewandter Seite der Zusatzlichtauskoppelbereich (51, 53) angeordnet ist.

16. Lichtleitelement (1) nach Anspruch 15, **dadurch gekennzeichnet, dass** ein erstes Schalenelement (50) mit einem ersten Zusatzlichtauskoppelbereich (51) und ein zweites Schalenelement (52) mit einem zweiten Zusatzlichtauskoppelbereich (53) vorgesehen sind.

17. Lichteinheit bzw. Kraftfahrzeugscheinwerfer mit zumindest einem Lichtquellen-Modul (20) sowie zumindest einem Lichtleitelement (1) nach einem der Ansprüche 1 bis 16 zum Einkoppeln von Licht aus dem zumindest einen Lichtquellen-Modul (20).

18. Lichteinheit bzw. Kraftfahrzeugscheinwerfer nach Anspruch 17, **dadurch gekennzeichnet, dass** das Lichtquellen-Modul (20) dazu eingerichtet ist, mehrfarbiges Licht in das Lichtleitelement (1) einzukoppeln.

19. Lichteinheit bzw. Kraftfahrzeugscheinwerfer nach Anspruch 17 oder 18, **dadurch gekennzeichnet, dass** das Lichtquellen-Modul (20) dimmbar ausgeführt ist.

20. Lichteinheit bzw. Kraftfahrzeugscheinwerfer nach einem der Ansprüche 17 bis 19, **dadurch gekennzeichnet, dass** im Lichtquellen-Modul (20) als Lichtquelle zumindest ein LED-Chip (23) vorgesehen ist.

## Claims

1. Light guide element (1) for a lamp unit or a motor vehicle headlamp, the light guide element (1) comprising at least one light input region (2) for coupling in light including at least one light source and the light guide element (1) further comprising at least one light output region (3) for coupling out the light, wherein
a beam region (4) is arranged between the light input region (2) and the light output region (3), at which a portion of the light guide element (1) coming from the light input region (2) is divided into at least one first light guide portion (5) and at least one second light guide portion (6), which portions extend in directions away from one another, wherein in the region spanned by the light guide portions (5, 6) a light guiding connecting element (7) is provided, which connecting element (7), at its side facing away from the light guide portions (5, 6), transitions into the light output region (3),
**characterised in that**
in the connecting element (7) light guide rods and/or light guide grooves are provided, originating at the light guide portions (5, 6) and merging into the light output region (3), and **in that** the light guide portions (5, 6) comprise optical structuring elements (8) on their side facing away from the light output region (3) and configured to divert the light irradiated into it to the connecting element.

2. Light guide element (1) according to claim 1, **characterised in that** in the beam splitting region (4), at the location from which the light guide portions (5, 6) emerge, at least one bifurcation element (13) is provided.

3. Light guide element (1) according to claim 2, **characterised in that** the bifurcation element (13) is optically thinner than the rest of the light guide element.

4. Light guide element (1) according to one of the preceding claims, **characterised in that** the cross-sections of the lower strands are designed with different diameters.

5. Light guide element (1) according to one of the claims 1 to 4, **characterised in that** the light guide rods (9) and/or light guide grooves originate on the light guide parts (5, 6) offside/ outside the beam splitting region (4) and are formed so as to extend into the region of the connecting element shaded by the beam splitting region (4).

6. Light guiding element (1) according to one of the preceding claims, **characterised in that** the structuring elements (8) have a prismatic structure (11).

7. Light guide element (1) according to one of the preceding claims, **characterised in that** the light guide portions (5, 6) have different cross-sectional diameters.

8. Light guide element (1) according to one of the preceding claims, **characterised in that** at least one feed element (12) is provided between the light input region (2) and the beam splitting region (4).

9. Light guiding element (1) according to claim 8, **characterised in that** the feed element (12) is realised as a light guide.

10. Light guide element (1) according to one of the preceding claims, **characterised in that** the light input region (2), the beam splitting region (4) and the light guide portions (5, 6) are constructed in one piece.

11. Light guide element (1) according to one of the preceding claims, **characterised in that** the connecting element (7) and the light output region (3) are made in one piece.

12. Light guide element (1) according to one of the claims 1 to 9, **characterised in that** the light input region (2), the beam splitting region (4), the light guide portions (5, 6), the connecting element (7) and the light output region (3) are constructed in one piece.

13. Light guide element (1) according to one of the preceding claims, **characterised in that** latching and/or referencing elements (40) for mounting the light guide element (1) are provided on the light guide element (1) in the region of the light input region (2).

14. Light guiding element (1) according to one of the preceding claims, **characterised in that** in the light extraction area (3) at least one additional light extraction area (51, 53) is provided.

15. Light guiding element (1) according to claim 14, **characterised in that** in the light output region (51, 53) at least one shell element (50, 52) which is open in the beam direction is provided, at the side thereof facing away from the light input region (2) the additional light output region (51, 53) being arranged.

16. Light guide element (1) according to claim 15, **characterised in that** a first shell element (50) having a first additional light outputting area (51) and a second shell element (52) having a second additional light outputting area (53) are provided.

17. Lamp unit or motor vehicle headlamp including at least one light source module (20) and at least one light guide element (1) according to any one of claims 1 to 16 configured to couple in light from the at least one light source module (20).

18. Lamp unit or motor vehicle headlamp according to claim 17, **characterised in that** the light source module (20) is configured to couple in multicolored light into the light guide element (1).

19. Lamp unit or motor vehicle headlamp according to claim 17 or 18, **characterised in that** the light source module (20) is dimmable.

20. Lamp unit or motor vehicle headlamp according to one of claims 17 to 19, **characterised in that** in the light source module (20), at least one LED chip (23) is provided as light source.

## Revendications

1. Elément de guidage de la lumière (1) pour une unité lumineuse ou un phare de véhicule automobile, l'élément de guidage de lumière (1) comprenant au moins une zone d'entrée de lumière (2) pour l'entrée de la lumière vers au moins une source de lumière et l'élément de guidage de lumière (1) comprenant également au moins une zone de sortie de lumière (3) pour la sortie de la lumière,
entre la zone d'entrée de lumière (2) et la zone de sortie de lumière (3) une zone de faisceau (4) étant disposée, qui divise la partie de l'élément de guidage de la lumière (1) provenant de la zone d'entrée de la lumière (2) en au moins une première partie de guidage de la lumière (5) et au moins une deuxième partie de guidage de la lumière (6) qui s'étendent dans des directions s'éloignant l'une de l'autre, un élément de liaison de guidage de la lumière (7) étant disposé dans la région tendue par les parties de guidage de la lumière (5, 6), lequel élément de liaison (7) se transforme en la zone de sortie de la lumière (3) sur son côté opposé aux parties de guidage de la lumière (5, 6),
**caractérisé en ce que**
dans l'élément de liaison (7) sont prévus des barreaux de guidage de lumière et/ou des rainures de guidage de lumière qui partent des parties de guidage de lumière (5, 6) et débouchent dans la zone de sortie de lumière (3), et
**en ce que** les parties de guidage de lumière (5, 6) comprennent sur leur côté opposé à la zone de sortie de lumière (3) des éléments de structuration optique (8) pour dévier la lumière irradiée dans l'élément de liaison.

2. Elément de guidage de la lumière (1) selon la revendication 1, **caractérisé en ce qu'**au moins un élément de bifurcation (13) est prévu dans la zone séparatrice du faisceau (4) à l'endroit d'où sortent les parties de guidage de la lumière (5, 6).

3. Elément de guidage de la lumière (1) selon la revendication 2, **caractérisé en ce que** l'élément de bifurcation (13) est optiquement plus mince que le reste de l'élément de guidage de la lumière.

4. Elément de guidage de la lumière (1) selon l'une quelconque des revendications précédentes, **caractérisé en ce que** les sections transversales des brins inférieurs sont conçues avec des diamètres différents.

5. Elément de guidage de la lumière (1) selon l'une quelconque des revendications 1 à 4, **caractérisé en ce que** les barreaux de guidage de la lumière (9) et/ou les rainures de guidage de la lumière ont leur origine sur les parties de guidage de la lumière (5, 6) à l'écart/hors de la zone séparatrice du faisceau (4) et sont conçues de manière à s'étendre dans la zone de l'élément de liaison ombragée par la zone séparatrice du faisceau (4).

6. Elément de guidage de la lumière (1) selon l'une quelconque des revendications précédentes, **caractérisé en ce que** les éléments de structuration (8) ont une structure prismatique (11).

7. Elément de guide de lumière (1) selon l'une quelconque des revendications précédentes, **caractérisé en ce que** les parties de guide de lumière (5, 6) ont des diamètres de section transversale différents.

8. Elément de guidage de la lumière (1) selon l'une quelconque des revendications précédentes, **caractérisé en ce qu'**au moins un élément d'alimentation (12) est prévu entre la zone d'entrée de la lumière (2) et la zone séparatrice du faisceau (4).

9. Elément de guidage de la lumière (1) selon la revendication 8, **caractérisé en ce que** l'élément d'alimentation (12) est conçu comme guide de lumière.

10. Elément de guidage de la lumière (1) selon l'une quelconque des revendications précédentes, **caractérisé en ce que** la zone d'entrée de la lumière (2), la zone séparatrice du faisceau (4) et les parties de guidage de la lumière (5, 6) sont formées solidairement.

11. Elément de guidage de la lumière (1) selon l'une quelconque des revendications précédentes, **caractérisé en ce que** l'élément de liaison (7) et la section de sortie de la lumière (3) sont formés solidairement.

12. Elément de guidage de la lumière (1) selon l'une quelconque des revendications 1 à 9, **caractérisé en ce que** la zone d'entrée de la lumière (2), la zone séparatrice du faisceau (4), les parties de guidage de la lumière (5, 6), l'élément de liaison (7) et la zone de sortie de la lumière (3) sont formés solidairement.

13. Elément de guidage de la lumière (1) selon l'une quelconque des revendications précédentes, **caractérisé en ce que** des éléments de verrouillage et/ou de référence (40) pour le montage de l'élément de guidage de la lumière (1) sont prévus sur l'élément de guidage de la lumière (1) dans la région de la zone d'entrée de la lumière (2).

14. Elément de guidage de la lumière (1) selon l'une quelconque des revendications précédentes, **caractérisé en ce qu'**au moins une zone d'extraction de la lumière supplémentaire (51, 53) est prévue dans la zone d'extraction de la lumière (3).

15. Elément de guidage de la lumière (1) selon la revendication 14, **caractérisé en ce que** dans la zone de sortie de la lumière (51, 53) est prévu au moins un élément en forme de coque (50, 52) qui est ouvert dans la direction du faisceau et sur le côté duquel, opposé à la zone d'entrée de la lumière (2), est disposée la zone de sortie de la lumière supplémentaire (51, 53).

16. Elément de guidage de la lumière (1) selon la revendication 15, **caractérisé en ce qu'**il est prévu un premier élément de coque (50) avec une première zone de sortie de la lumière supplémentaire (51) et un deuxième élément de coque (52) avec une deuxième zone de sortie de la lumière supplémentaire (53).

17. Unité lumineuse ou phare de véhicule automobile comportant au moins un module de source lumineuse (20) et au moins un élément de guidage de lumière (1) selon l'une quelconque des revendications 1 à 16 pour le couplage de la lumière provenant dudit au moins un module de source lumineuse (20).

18. Unité lumineuse ou phare de véhicule automobile selon la revendication 17, **caractérisé en ce que** le module de source lumineuse (20) est configuré pour introduire de la lumière multicolore dans ledit au moins un module de source lumineuse (20).

19. Unité lumineuse ou phare de véhicule automobile selon la revendication 17 ou 18, **caractérisé en ce que** le module de source lumineuse (20) est graduable.

20. Unité lumineuse ou phare de véhicule automobile selon l'une quelconque des revendications 17 à 19, **caractérisé en ce que** dans le module de source lumineuse (20) au moins une puce LED (23) est prévue comme source lumineuse.
